# FASCICULE DE BREVET EUROPEEN

(11) **EP 2 368 723 B1**
(45) Date de publication et mention de la délivrance du brevet: **26.08.2015**
(21) Numéro de dépôt: 11305263.3
(22) Date de dépôt: 10.03.2011
(51) Int. Cl.: B60B 27/00, B60K 17/04

(54) **Agencement d'un dispositif de controle mecanique de la rotation d'une roue montee sur moyeu de roue**
Vorrichtungsanordnung zur mechanischen Kontrolle der Rotation eines Rades montiert auf einer Radnabe
Device arrangement of the mechanical control of the rotation of a wheel mounted on a wheel hub

(30) Priorité: 10.03.2010 FR 1051732
(43) Date de publication de la demande: 28.09.2011
(73) Titulaire: Guilbard, Paul, 86130 Dissay (FR)
(72) Inventeur: Guilbard, Paul, 86130 Dissay (FR)
(74) Mandataire: Fantin, Laurent

(56) Documents cités:
- EP-A1- 0 084 732
- WO-A1-96/04148
- FR-A1- 2 322 757
- US-A- 3 042 145

## Description

La présente invention concerne un agencement d'un dispositif de contrôle mécanique de la rotation d'une roue montée sur un moyeu de roue, comme révélé dans US 3042145 A et correspondant au préambule de la revendication 1.

On connaît un dispositif de contrôle mécanique de la rotation d'un arbre tournant décrit dans la demande de brevet européen N° 770 009 au nom du même déposant.

De façon surprenante, il a été mis au point ce dispositif dont on s'aperçoit qu'il apporte des effets sécuritaires importants, notamment pour les véhicules routiers.

On entend pour la suite de la description par véhicules les voitures comme les camions ou les remorques.

En effet, le dispositif peut se positionner sur un arbre menant comme sur un arbre mené.

Ce dispositif comprend de façon simple mais non moins efficace, une couronne dentée solidaire du châssis du véhicule et donc immobilisée en rotation et des satellites, au moins deux pour un effet de symétrie qui sont en prise constante sur la couronne.

La couronne est avantageusement à denture interne et les satellites sont placés à l'intérieur de ladite couronne.

En l'occurrence, le nombre de satellites est de trois, de façon à obtenir non seulement une symétrie mais une disposition stable, comme cela est appréciable en mécanique.

Ces satellites sont avantageusement montés libres en rotation dans une cage et ils engrènent uniquement sur la couronne.

Cette cage est munie de fenêtres, une au droit de chaque satellite, pour laisser passer la denture des satellites, sur un secteur angulaire suffisant pour que les dents des satellites engrènent avec la couronne.

C'est le montage retenu pour l'agencement selon la présente invention sans que cela soit considéré comme limitatif.

Le montage peut être bien sûr être inversé avec la cage des satellites fixe et la couronne solidaire de la partie mobile.

On sait en effet que les roues d'un véhicule sont montées libres en rotation, quand elles sont menées bien sûr mais également quand elles sont menantes puisqu'il y a un différentiel interposé entre l'entraînement moteur et lesdites roues ou plus exactement les arbres d'entraînement de ces arbres.

On exclut le cas où il existe un blocage du différentiel car !'entraînement mécanique est directement en prise avec le moteur et donc contrôlé.

Ainsi, en présence du différentiel, une des roues sur une surface non adhérente peut patiner et tourner dans le vide tandis que l'autre est immobilisée sur une surface adhérente, c'est le propre du différentiel qui assure la fonction pour laquelle il a été interposé.

C'est ce qui permet au véhicule de tourner aisément puisque l'une des roues, celle qui est intérieure au virage tourne moins vite, du fait qu'elle parcourt une distance moindre, il faut donc permettre de découpler la vitesse de rotation de ces roues.

Par contre, on comprend aussi que le couple moteur est donc flottant, c'est-à-dire qu'il se répartit suivant l'adhérence de la roue.

On remarque aussi que cela est exactement la même chose pour le freinage car la puissance de freinage étant identique entre les deux roues d'un même train, la roue qui adhère le moins se bloque tandis que l'autre ne reçoit pas assez de puissance de freinage éventuellement.

Des systèmes d'assistance ont été mis en place qui assurent une répartition de la puissance de freinage, en relâchant la pression de freinage sur la roue qui tourne le moins vite, ce qui équilibre le freinage. Néanmoins, la puissance de freinage reste moins efficace qu'elle ne pourrait l'être.

La aussi, il n'y a pas de contrôle du mouvement en rotation par rapport au châssis, chacune des roues étant libre en rotation.

Le but de la présente invention est donc de lier en mouvement la rotation de chacune des roues par rapport au châssis du véhicule qui est le seul élément fixe de référence du mobile en mouvement qu'est le véhicule sur lequel sont rapportés les ensembles arbres de roues/roues.

Comme cela est bien connu, les roues sont rapportées sur des moyeux qui comportent chacun un ensemble de roulements pour permettre la libre rotation du moyeu support de roue par rapport à une fusée fixe, solidaire du châssis. Ensuite, un arbre menant assure !'entraînement du moyeu pour les roues motrices, ledit arbre de roue passant à travers ladite fusée.

Le problème qui se pose est de pouvoir monter l'agencement couronne/satellites sur les moyeux existants de façon à permettre une plus grande diffusion du dispositif. En effet, les pièces de première monte ne sont pas prévues pour permettre l'interposition d'un élément supplémentaire.

La première solution est décrite suivant une première variante.

De la même façon, se pose le problème de l'intégration de ce même agencement couronne/satellites directement dans le roulement, ce qui est décrit en variante. C'est le but de l'invention de proposer un agencement qui autorise le montage de ce dispositif de contrôle de la vitesse de rotation d'une roue menante ou menée, ceci sans modifier les pièces en place et sans modifier les caractéristiques du véhicule.

L'agencement est décrit ci-après en regard des figures suivantes établies a titre d'illustration de la description qui va suivre.

Ces figures représentent :
- Figure 1 : une vue schématique de l'architecture mécanique d'un arbre de roue menante,
- Figure 2 : une vue schématique de la même architecture que celle de la figure 1 mais avec le dispositif de contrôle de la vitesse de rotation intégré,
- Figure 3 : une vue éclatée du dispositif de contrôle de la rotation d'une roue avec sa cage et ses satellites,
- Figure 4 : une vue d'un roulement monté intégrant le dispositif de contrôle de vitesse,
- Figure 5 : une vue éclatée du roulement et du dispositif de contrôle de vitesse,
- Figure 6 : une vue en coupe radiale et en perspective dudit roulement monté.

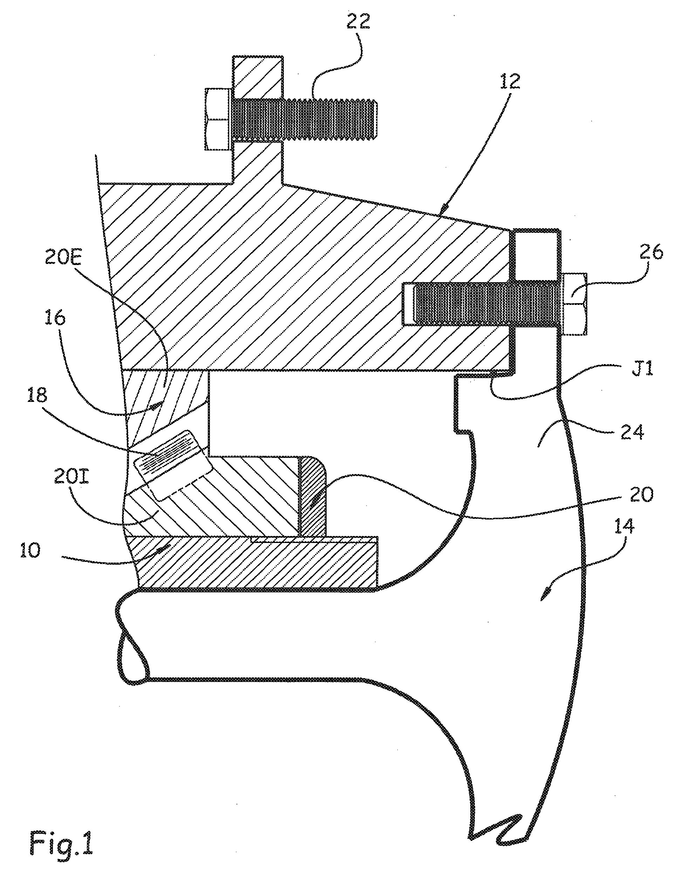

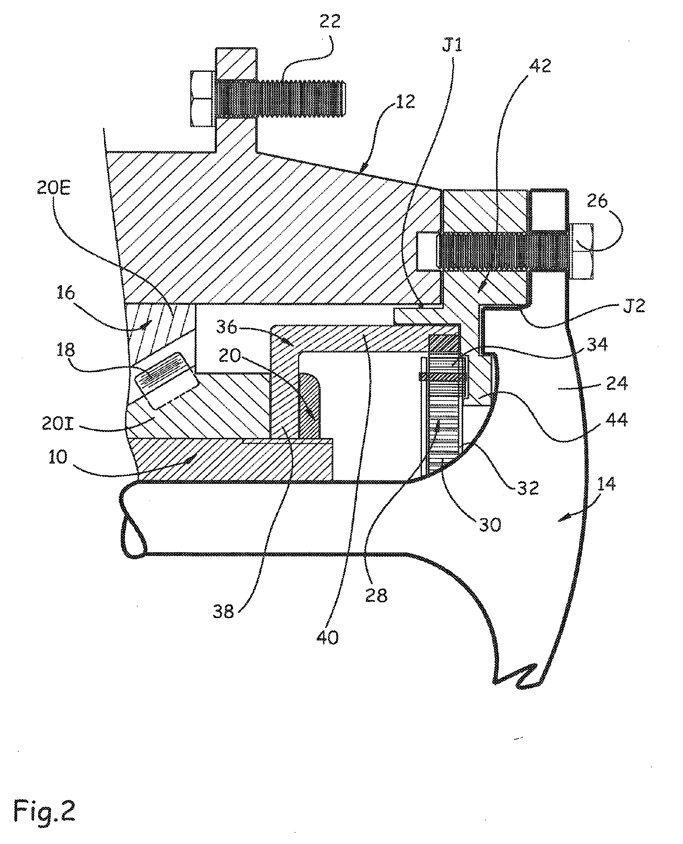

Sur la figure 1 comme sur la figure 2, les pièces communes portent les mêmes références.

Ainsi, on peut constater la présence des éléments essentiels comprenant une fusée 10, un moyeu 12 et un arbre de roue 14.

La fusée 10 est solidaire du châssis du véhicule, non représenté, et constitue le point fixe.

Cette fusée 10 est directionnelle pour les roues qui le sont.

La fusée 10 sert donc de support au moyeu 12.

Le moyeu 12 est monté à rotation, de façon coaxiale externe par rapport à la fusée 10. Un roulement 16 est interposé entre ladite fusée 10 et ledit moyeu 12. Ce roulement 16 est avantageusement et de façon connue un roulement à rouleaux 18 mais pourrait être de la même façon un roulement à billes.

La cage intérieure est donc solidaire de la fusée 10 tandis que la cage extérieure est solidaire du moyeu 12. Un écrou 20 assure la fixation de la cage intérieure 20I de ce roulement, la cage 20E étant solidaire du moyeu.

Le moyeu 12 comprend en périphérie des moyens 22 de fixation de la jante portant le pneumatique (non représentée). Ces moyens 22 de fixation sont représentés comme étant des boulons mais ils peuvent se présenter sous la forme de goujons, ce qui est totalement équivalent.

L'arbre de roue 14 assure l'entraînement en rotation du moyeu 12. A cet effet, l'arbre de roue 14 comporte une extrémité cannelée pour coopérer avec une douille de profil conjugué, montée à rotation par rapport au bloc moteur afin de lier l'entraînement en rotation. Un montage à la cardan est interposé entre les deux de façon à laisser travailler la suspension, ceci de façon connue et n'est donc pas représenté.

L'autre extrémité de cet arbre de roue 14 comprend une tête 24, solidaire de cet arbre et apte à venir coopérer avec le moyeu 12.

L'arbre 14 de roue traverse la fusée 10, seule la tête 24 venant coiffer l'ensemble.

La tête 24 est solidarisée au moyeu par des vis 26 et un joint J1 est interposé entre la tête 24 et le moyeu, pour assurer au moins une étanchéité à la poussière.

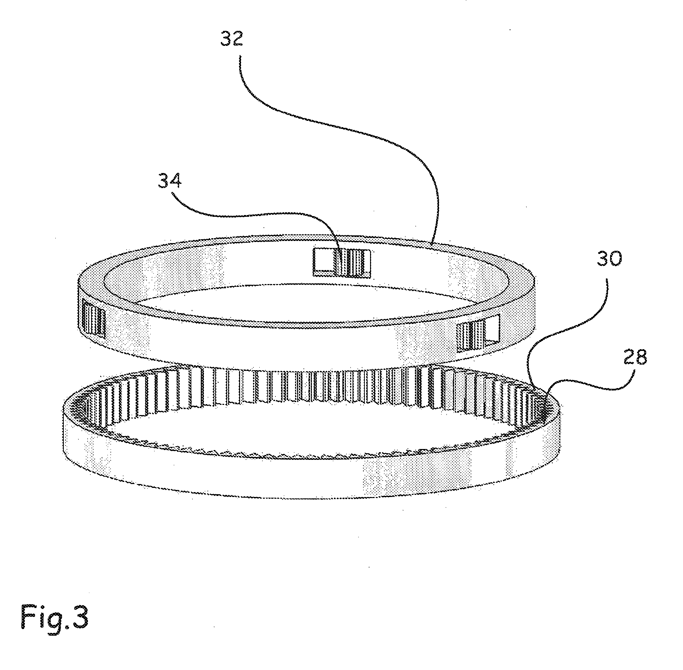

Sur la figure 2, on a représenté un agencement dit en série, comprenant le dispositif 28 de contrôle de la vitesse de rotation, voir le détail sur la figure 3, qui comprend une couronne 30 fixe solidaire de la fusée 10 et une cage 32 comportant en l'occurrence trois satellites 34.

La couronne 30 est placée dans un support 36 fixe, immobilisé entre la cage 201 intérieure du roulement et l'écrou 20 de fixation.

Ce support 36 est un disque 38 comportant une aile 40 dans laquelle est rapportée ladite couronne 30, par sa périphérie extérieure, laissant les dents accessibles sur la périphérie intérieure.

Une entretoise 42 est interposée entre le moyeu 12 et la tête 24 de l'arbre de roue 14.

Cette entretoise 42 est munie de passages des vis 26 de fixation de la tête 24 sur le moyeu 12 de façon à rendre l'ensemble parfaitement solidaire.

On note que le joint J1 est maintenant interposé entre le moyeu 12 et l'entretoise 42 tandis qu'un second joint J2 est ajouté et interposé entre ladite entretoise 42 et la tête 24 d'arbre de roue 14.

L'entretoise 42 possède une branche 44 qui porte la cage 32 des satellites 34 de façon à la rendre solidaire en rotation de ladite entretoise.

Ainsi, on a l'agencement suivant.

Une partie tournante comprenant de façon solidaire après fixation et serrage des différentes vis :
- Le moyeu 12 avec la cage extérieure 20E du roulement 16,
- L'entretoise 42
- La cage 32 des satellites 34,
- L'arbre de roue 14 avec sa tête 24.

Une partie fixe comprenant :
- Une fusée 10, solidaire du châssis, portant la cage intérieure 20I du roulement 16,
- Un support 36 fixe bloqué contre la cage 201 intérieure du roulement 16, elle-même fixée sur la fusée par l'écrou 20,
- Une couronne 30 solidaire de ce support 36 fixe qui reçoit par engrènement les satellites 34.

Ainsi, on constate que le seul point de contact entre la partie tournante et la partie fixe, en dehors du roulement, est constituée des satellites 34 engrenant uniquement sur la couronne 30.

On a donc bien conservé l'architecture du montage de l'arbre de roue généralement présent sur les roues de véhicule et grâce à l'agencement selon la présente invention, on a pu interposer le dispositif de contrôle de la vitesse de rotation d'une roue de véhicule.

Bien entendu, dans le cas d'une roue menée, l'agencement est strictement le même. Seul l'arbre d'entraînement de roue est absent. Il subsiste alors uniquement la tête 24 qui sert de cache moyeu et immobilise l'entretoise 42 de la même façon.

On obtient ainsi bien l'effet recherché qui consiste à avoir toujours la roue en prise par la coopération des satellites sur la couronne.

Ceci évite donc l'emballement d'une roue par rapport au châssis en contrôlant son mouvement de rotation.

On peut expliquer cela par le fait que lorsqu'il est prévu uniquement un palier lisse comme un roulement, la mise en rotation est instantanée.

Donc, pour un véhicule routier, lorsque l'une des roues motrices reçoit tout le couple moteur du fait du différentiel qui lors d'une perte d'adhérence du pneumatique sur la surface transmet tout le couple à ladite roue, il se produit un effet de régulation de ladite vitesse de rotation par la prise mécanique des satellites sur la couronne, réduisant donc cette perte d'adhérence en limitant la transmission du couple. Cette transmission du couple est régulée et différée, ce qui permet à la roue de reprendre de l'adhérence, si cela est possible bien sûr, au lieu d'aggraver la perte d'adhérence en recevant toute la puissance moteur. On constate que la voie du véhicule est conservée du fait que le moyeu reste à sa place, la tête 24 d'arbre de roue est entièrement masquée par la jante et le déport de l'ordre de 20 millimètres n'est ni préjudiciable ni même visible et sans aucune altération des propriétés mécaniques de l'arbre de roue.

Une autre solution consiste à intégrer l'ensemble du dispositif 28 de contrôle de vitesse dans le roulement 16.

Un tel roulement 16 est du type double, à cage principale unique et deux rangées de billes ou de rouleaux.

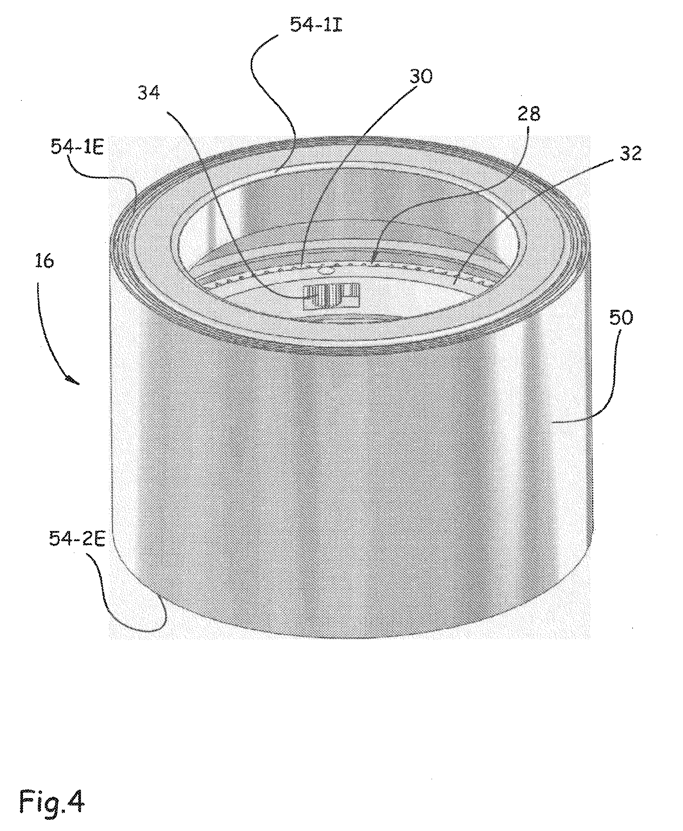

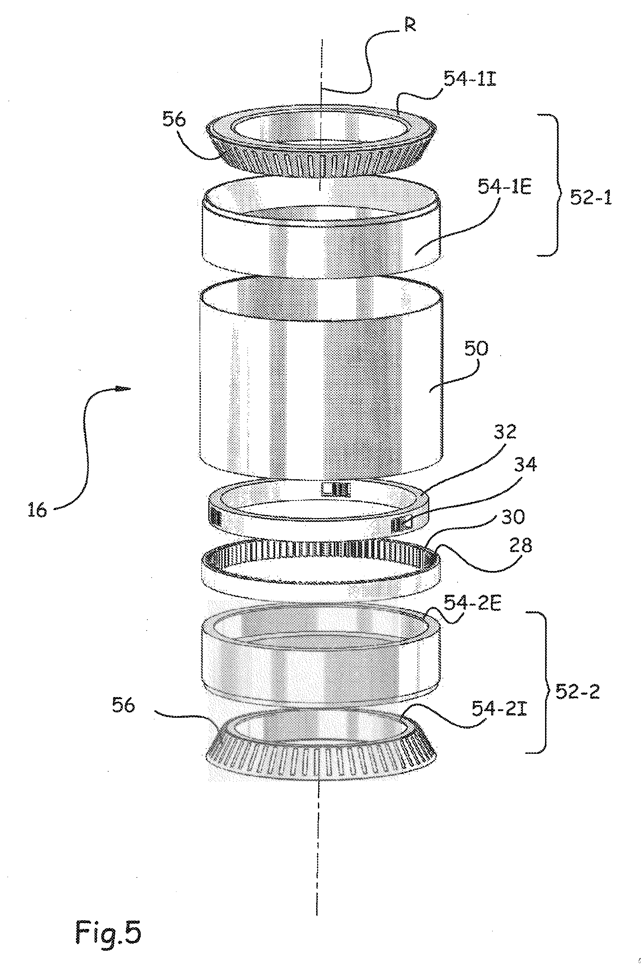

Ce roulement 16 est représenté de façon isolée, sur les figures 4 à 6.

Le roulement 16 comprend donc précisément une cage 50 principale, deux rangées 52-1 et 52-2 de roulements, en l'occurrence des rouleaux.

Chaque rangée comprend une cage extérieure 54E et une cage intérieure 54I et des rouleaux 56, interposés entre les deux.

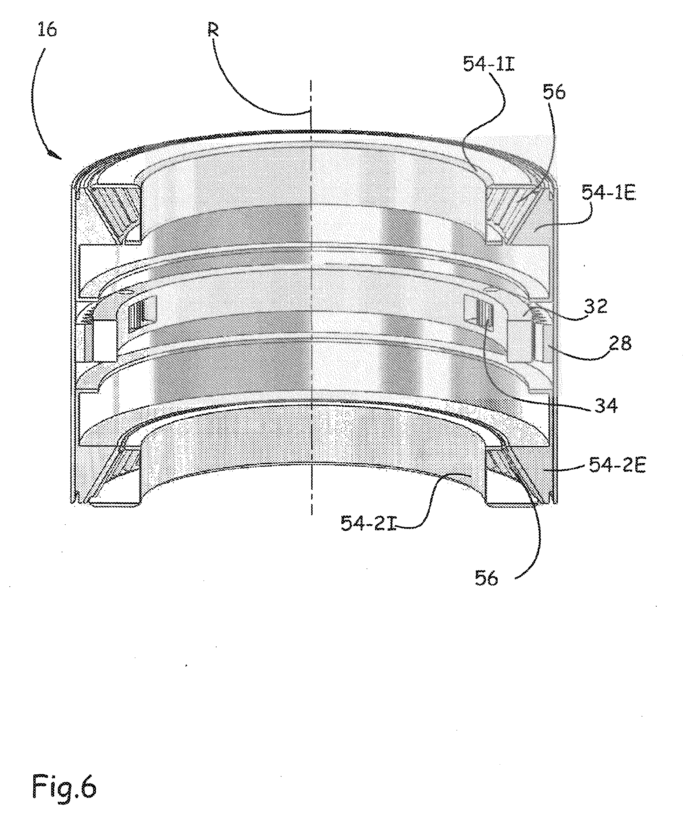

Ces deux rangées sont espacées l'une de l'autre suivant l'axe central de rotation R. Ceci est particulièrement visible sur la figure 6.

De fait, il est possible de loger ledit dispositif 28 de contrôle de la vitesse dans cet espace.

On retrouve les mêmes éléments qui portent les mêmes références, à savoir un dispositif de contrôle de vitesse 28 composé d'une couronne 30 fixe dans la cage 50 extérieure et d'une cage 32 portant les trois satellites 34.

La cage 32 est solidaire comme les cages intérieures 54-1I et 54-2I de l'arbre de roue 14, non représenté, et destiné à être monté de façon coaxiale au roulement.

Cet agencement permet également d'intégrer le dispositif directement dans le roulement, ce qui est particulièrement avantageux, en terme de montage car il n'y a là aucune modification du moyeu dans ce cas, mais une véritable intégration entre les deux rangées de roulements.

On note que cet agencement est réalisable en utilisant les roulements existants du commerce.

Par contre, on constate que l'on obtient bien le même effet puisque la couronne est fixe par rapport au châssis et les satellites portés par la cage 32 sont mobiles et engrènent sur la couronne, assurant une liaison de mouvement.

## Revendications

1. Agencement d'un dispositif (28) de contrôle mélanique de la rotation d'une roue d'un véhicule, comprenant une couronne (30) et une cage (32) avec au moins deux satellites (34), ladite roue étant fixé sur une moyeu (12) monté à rotation sur une fusée (10), par interposition d'au moins un roulement (16) fixé par un écrou (20), au moins une tête (24) de moyeu fixée sur ledit moyeu par des moyens (26) de fixation, la couronne (30) étant immobilisée en rotation par rapport à la fusée (10) et la cage (32) avec ses au moins deux satellites (34) est solidaire en rotation du moyeu (12) de roue, **caractérisé en ce que** les satellites (34) engrenant uniquement sur la couronne (30).

2. Agencement d'un dispositif (28) de contrôle mélanique de la rotation d'une roue d'un véhicule, selon la revendication 1, **caractérisé en ce que** qu'il est disposé en série avec le roulement (16) et comprend une entretoise (42), interposée entre le moyeu (12) et la tête (24) de moyeu, cette entretoise pourtant la cage (32) avec les satellites (34).

3. Agencement d'un dispositif (28) de contrôle mécanique de la rotation d'une roue d'un véhicule, selon la revendication 2, **caractérisé en ce que** la couronne (30) est rapportée sur un support (36) fixe solidaire de la fusée (10).

4. Agencement d'un dispositif (28) de contrôle mécanique de la rotation d'une roue d'un véhicule, selon la revendication 3, **caractérisé en ce que** le support (36) fixe est constitué d'un disque (38) immobilisé entre le roulement (16) et l'écrou (20) et d'une aile (40) supportant la couronne (30).

5. Agencement d'un dispositif (28) de contrôle mélanique de la rotation d'une roue d'un véhicule, selon l'une quelconque des revendications précédentes, **caractérisé en ce qu'**il est prévu trois satellites (34) et **en ce que** la cage comporte des fenêtres de façon à laisser passer la denture desdits satellites.

6. Agencement d'un dispositif (28) de contrôle mécanique de la rotation d'une roue d'un véhicule, selon l'une quelconque des revendications précédentes, **caractérisé en ce que**, dans le cas d'une roue menante, l'arbre (14) de roue est fixé à la tête (24) cache moyeu.

7. Agencement d'un dispositif (28) de contrôle mécanique de la rotation d'une roue d'un véhicule, selon la revendication 1, **caractérisé en ce que** ledit dispositif est intégré dans le roulement (16), le roulement (16) comprenait une cage (50) principale, deux rangées (52-1, 52-2) de roulements, chaque rangée comprenant une cage extérieure (54E) et une cage intérieure (54I) et des rouleaux (56), interposés entre lesdites deux cages, ces deux rangées étant espacées l'une de l'autre suivant l'axe central de rotation R, la couronne (30) étant portée par cette cage (50) tandis que la cage (32) avec les satellites (34) est solidaire du moyeu.

## Patentansprüche

1. Vorrichtungsanordnung (28) für die mechanische Kontrolle der Raddrehung des Rades eines Fahrzeugs, die einen Zahnkranz (30) und einen Käfig (32) mit wenigstens zwei Satellitenrädern (34) aufweist, wobei das Rad an einer Nabe (12) befestigt ist, die drehbar auf einem Achsschenkel (10) angebracht ist, mittels wenigstens eines Radlagers (16), das durch eine Mutter (20) befestigt ist, wobei wenigstens ein Kopf (24) der Nabe auf der Nabe durch Befestigungsmittel (26) befestigt ist, der Zahnkranz gegen eine Drehung bezüglich des Achsschenkels (10) gesichert ist und der Käfig (32) mit seinen wenigstens zwei Satellitenrädern (34) drehbar an der Nabe (12) des Rades angebracht ist, **dadurch gekennzeichnet, dass** die Satellitenrädern (34) ausschließlich mit dem Zahnkranz (30) in Eingriff stehen.

2. Vorrichtungsanordnung (28) für die mechanische Kontrolle der Raddrehung eines Fahrzeugs nach Anspruch 1, **dadurch gekennzeichnet, dass** diese in Reihe mit dem Lager (16) angeordnet ist und einen Abstandshalter (42) umfasst, der zwischen der Nabe (12) und dem Kopf (24) der Nabe angeordnet ist, wobei dieser Abstandshalter den Käfig (32) mit den Satellitenrädern (34) hält.

3. Vorrichtungsanordnung (28) für die mechanische Kontrolle der Raddrehung eines Fahrzeugs nach Anspruch 2, **dadurch gekennzeichnet, dass** der Zahnkranz (30) an einer festen Halterung (36) angebracht ist, die am Achsschenkel (10) befestigt ist.

4. Vorrichtungsanordnung (28) für die mechanische Kontrolle der Raddrehung eines Fahrzeugs nach Anspruch 3, **dadurch gekennzeichnet, dass** die feste Halterung (36) aus einer Scheibe (38) besteht, die zwischen dem Lager (16) und der Mutter (20) festgehalten ist, und einem Abschnitt(40), der den Zahnkranz (30) hält.

5. Vorrichtungsanordnung (28) für die mechanische Kontrolle der Raddrehung eines Fahrzeugs nach einem der vorhergehenden Ansprüche, **dadurch gekennzeichnet, dass** drei Satellitenräder (34) vorgesehen sind und dass der Käfig Fenster aufweist, der die Zahnung der Satellitenräder hindurchtreten lässt.

6. Vorrichtungsanordnung (28) für die mechanische Kontrolle der Raddrehung eines Fahrzeugs nach einem der vorhergehenden Ansprüche, **dadurch gekennzeichnet, dass** im Fall eines Antriebsrades die Achse (14) des Rades an dem die Nabe abdeckenden Kopf (24) befestigt ist.

7. Vorrichtungsanordnung (28) für die mechanische Kontrolle der Raddrehung eines Fahrzeugs nach Anspruch 1, **dadurch gekennzeichnet, dass** die Vorrichtung in das Lager (16) integriert ist, wobei das Lager (16) einen Hauptkäfig (50) umfasst und zwei Reihen (52-1, 52-2) von Lagern, wobei jede Reihe einen äußeren Käfig (54E) und einen inneren Käfig (541) und Rollen (56) aufweist, die zwischen den beiden Käfigen angeordnet sind, wobei die beiden Reihen bezüglich der zentralen Rotationsachse R im Abstand angeordnet sind und wobei der Zahnkranz (30) durch diesen Käfig (50) gehalten ist, während der Käfig (32) mit den Satellitenrädern (34) an der Nabe angebracht ist.

## Claims

1. An arrangement of a device (28) for the mechanical control of the rotation of a vehicle wheel, comprising a ring gear (30) and a cage (32) with at least two planet gears (34), said wheel being fixed to a hub (12) mounted for rotation on a spindle (10), through the interposing of at least one bearing (16) fixed by a nut (20), at least one hub head (24) fixed to said hub by fixing means (26), the ring gear (30) being immobilised rotationally with respect to the spindle (10), and the cage (32) with its at least two planet gears (34) is constrained to rotate with the wheel hub (12), **characterised in that** the planet gears (34) mesh solely on the ring gear (30).

2. An arrangement of a device (28) for mechanically controlling the rotation of a vehicle wheel, according to claim 1, **characterised in that** it is placed in series with the bearing (16) and comprises a strut (42) interposed between the hub (12) and the hub head (24), this strut carrying the cage (32) with the planet gears (34).

3. An arrangement of a device (28) for mechanically controlling the rotation of a vehicle wheel, according to claim 2, **characterised in that** the ring gear (30) is attached to a fixed support (36) secured to the spindle (10).

4. An arrangement of a device (28) for mechanically controlling the rotation of a vehicle wheel, according to claim 3, **characterised in that** the fixed support (36) comprises a disc (38) immobilised between the bearing (16) and the nut (20) and a flange (40) supporting the ring gear (30).

5. An arrangement of a device (28) for mechanically controlling the rotation of a vehicle wheel, according to any one of the preceding claims, **characterised in that** three planet gears (34) are provided and **in that** the cage comprises windows so as to allow the teeth on said planet gears to pass.

6. An arrangement of a device (28) for mechanically controlling the rotation of a vehicle wheel, according to any one of the preceding claims, **characterised in that**, in the case of a driving wheel, the wheel shaft (14) is fixed to the hub-cover head (24).

7. An arrangement of a device (28) for mechanically controlling the rotation of a vehicle wheel, according to claim 1, **characterised in that** said device is integrated in the bearing (16), the bearing (16) comprising a main cage (50) and two rows (52-1, 52-2) of bearings, each row comprising an outer cage (54E) and an inner cage (541) and rollers (56) interposed between said two cages, these two rows being spaced apart from each other along the central rotation axis R, the ring gear (30) being carried by said cage (50) while the cage (32) with the planet gears (34) is secured to the hub.
